# EUROPEAN PATENT APPLICATION

(11) **EP 2 053 713 A1**
(43) Date of publication of application: **29.04.2009**
(21) Application number: 07119380.9
(22) Date of filing: 26.10.2007
(51) Int. Cl.: H02B 1/30, H02B 1/044

(54) **Electric switchgear with tiltable electronic device**

(71) Applicant: ABB Technology AG, 8050 Zürich (CH)
(72) Inventor: Di Maio, Luciano, I 20162, MILANO (IT); Bresciani, Massimo, 24020 Villa di Serio (BG) (IT)
(74) Representative: De Santis, Giovanni

(57) **Abstract**

An electric switchgear comprising a panel and one or more electronic units having a face adapted for interfacing with a user. The switchgear comprises a mounting device for connecting at least one electronic unit to the panel in tiltable positions with respect to the panel itself.

## Description

The present invention relates to an electric switchgear with a tiltable electronic device, an electric substation comprising such a switchgear, and an electronic device adapted for being mounted in tiltable positions in an electric switchgear.

As it is known, power systems for transmitting and distributing electricity from power sources to various loads and users are equipped with several types of electrical equipments which are adapted for ensuring a proper functioning of an associated power line and of loads/users connected therewith.

To this end, the latest advancements in microprocessor-based devices and digital signal processing technologies have led to the proliferation of electronic devices, typically intelligent electronic devices (IEDs), such as protection or control relays, which are widely used in electric switchgear for performing various protection, control and monitoring tasks. Often, a user is allowed to operatively access an electronic device by using a human-machine interface, commonly referred to as user-interface or HMI, for instance in order to set up the most appropriate processing strategies. An HMI is an electronic interface arrangement, usually provided with a display and a keyboard or some functional buttons, which is embedded in or operatively coupled to the associated electronic device, and allows users for example to program the functions of the electronic device, it displays data/information regarding the status of the device itself and more in general the results of monitoring/protection/control activities run by the device on the associated power system.

Typically, such electronic devices are mounted in an electric switchgear by securedly connecting them to a panel of the switchgear in a fixed predetermined position. In some cases, due to the layout of the switchgear or the positioning of the switchgear in the installation site, a user can have problems in easily accessing the electronic device and properly interfacing with the related HMI. For example, the electronic device may be mounted too high or too low, or there might be light reflections, which circumstances may render difficult or even impossible to read the information displayed and then initiate proper actions by using the buttons provided on the HMI.

Thus, the aim of the present invention is to overcome the above indicated drawbacks and to provide a solution which gives a user an easier access to an electronic device and the information/data displayed by it.

This solution is given by the present invention which provides an electric switchgear comprising a panel, and at least one electronic unit having a face adapted for interfacing with a user. The electric switchgear is characterized in that it comprises a mounting device for connecting said at least one electronic unit to said panel in tiltable position with respect to the panel itself.

The present invention provides also an electronic device suitable for being used in an electric switchgear having a panel. The electronic unit according to the invention comprises a shaped body having a face adapted for interfacing with a user and is characterized in that it further comprises a mounting device for connecting the shaped body of the electronic device to said panel in tiltable position with respect to the panel itself.

The features, aspects, and advantages of the present invention will become better understood with regard to the following description, appended claims, and accompanying drawings wherein:
figure 1 schematically shows an electric switchgear according to the invention;
figures 2-4 show possible embodiments for components of a mounting device used in the electric switchgear according to the invention;
figure 5 shows an electronic device connected to a panel in a non-tilted position by using the mounting device of figures 2-4 assembled in a first configuration;
figure 6 shows the device of figure 5 in a first position tilted downwardly;
figure 7 shows an electronic device connected to a panel in a non-tilted position by using the mounting device of figures 2-4 assembled in a second configuration;
figure 8 shows the device of figure 7 in a first position tilted upwardly;
figure 9 is a side view showing a detail of the electronic device connected to the mounting device of figures 2-4.

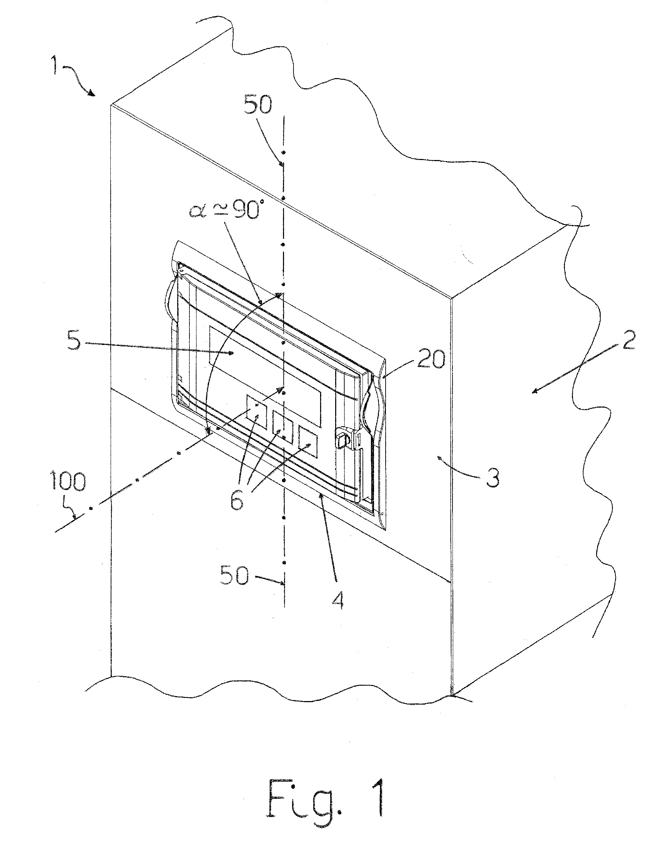

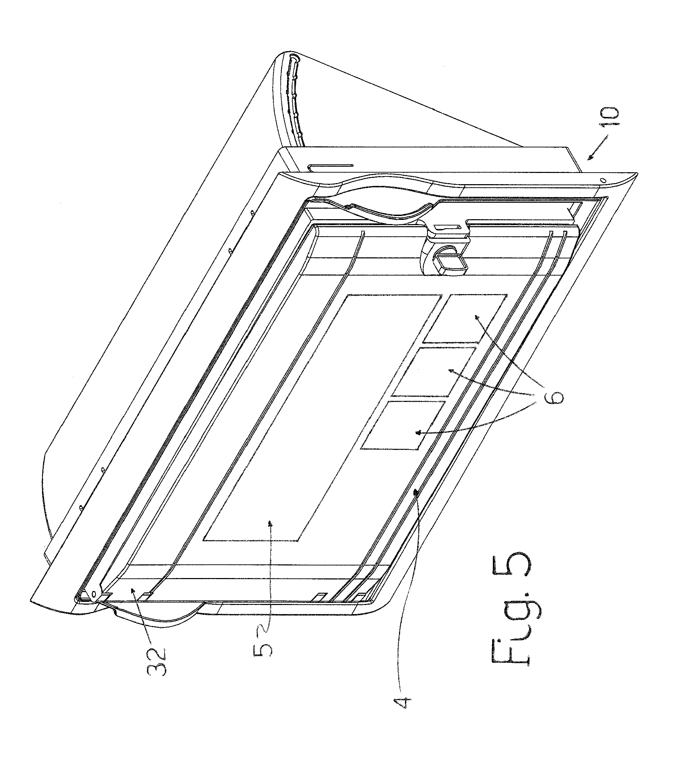

Figure 1 schematically illustrates an embodiment of an electric switchgear 1 according to the invention, which can be also indicated in the art for instance, but not limited to, as an electric switchboard, an electric panel, an electric switchboard bay, an electric cabinet, or similar definitions. Usually, such switchgear 1 comprises a cubicle enclosure 2 inside which an adequate space is delimited for accommodating the various equipments which are necessary for performing the required power system management functions. The switchgear comprises also one or more panels 3, which can constitute or be part also of the door of the enclosure 2. The switchgear 1 according to the invention is also provided with at least one electronic unit 4 having a suitably shaped body provided with a face adapted for interfacing with a user. In particular, as illustrated in the embodiment of figures 5-8 this face of the electronic unit 4 is provided with a display 5 for displaying information/data to a user, and a plurality of functional buttons 6 suitable for being used by the user itself. Depending on the applications, the face for interfacing with a user can be provided with any other additional or alternative features, such as signaling LEDs, a plug for a security-key, etc.

Advantageously, the switchgear 1 according to the invention comprises a mounting device, globally indicated by the reference number 10, for connecting the at least one electronic unit 4 to a panel 3 in tiltable position with respect to the panel 3 itself.

Preferably, the mounting device 10 is configured to connect the at least one electronic unit 4 to the panel 3 in a plurality of different predefined stable positions.

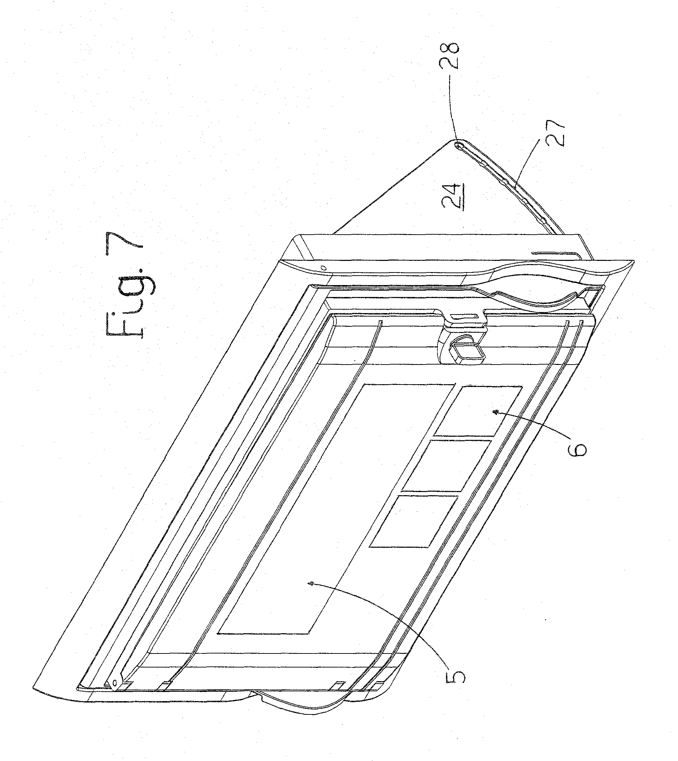

Further, with respect to the panel 3, the mounting device is configured to be connected to the panel 3 itself either in a first configuration (embodiment of figures 5-6) or in a second configuration (embodiment of figures 7-8) wherein it is mounted upside down with respect to the first configuration.

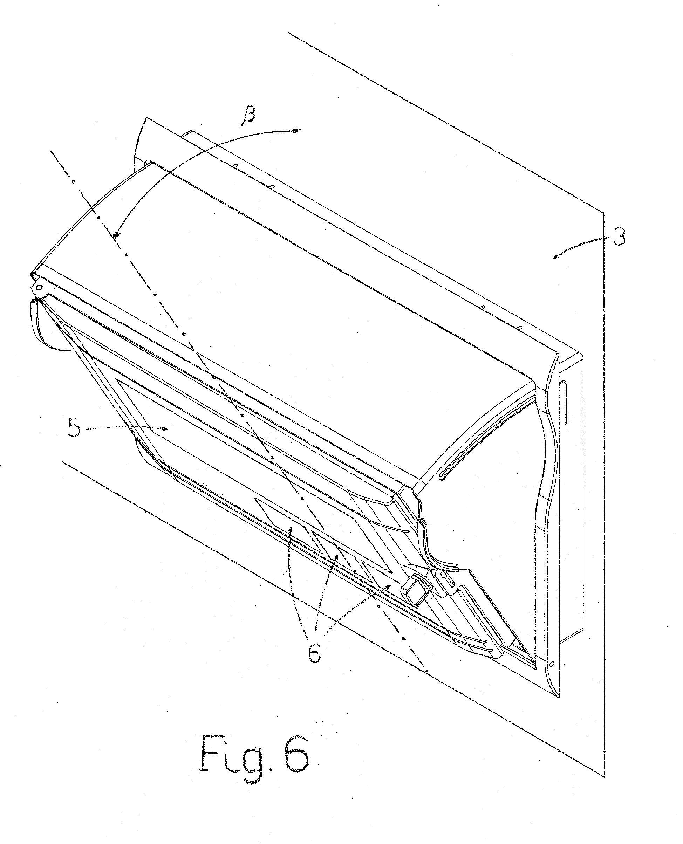

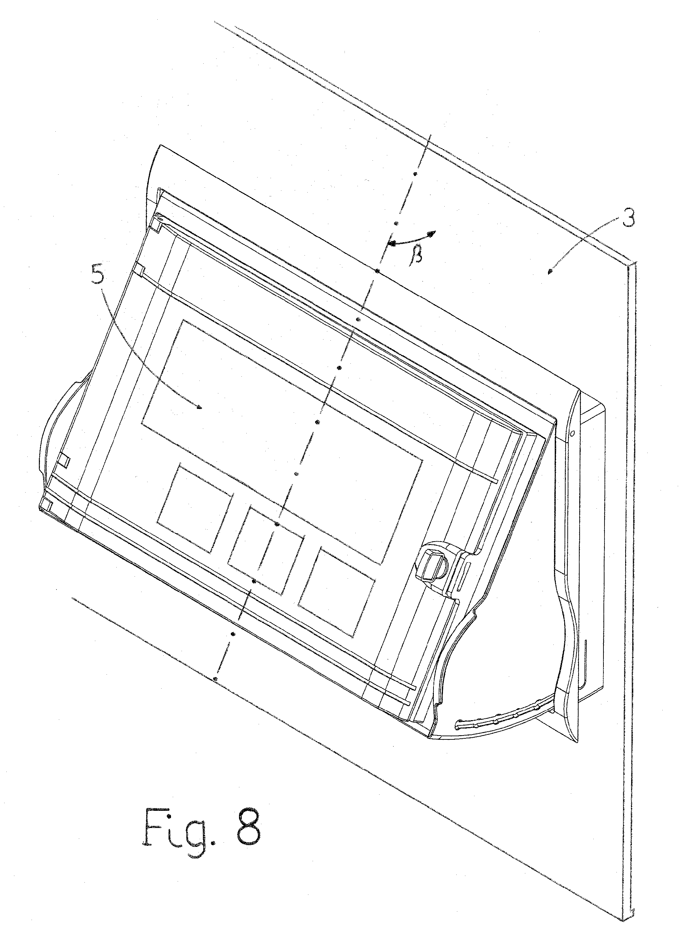

In particular, according to the first embodiment shown in figures 5-6, the mounting device 10 is adapted to connect the electronic unit 4 to the panel in one or more stable positions tilted downwardly with respect to the panel 3 itself, as shown in figure 6; alternatively, as illustrated in the second embodiment shown in figures 7-8, the mounting device 10 is adapted to connect the electronic unit 4 to the panel 3 in one or more stable positions tilted upwardly with respect to the panel 3, as shown in figure 8.

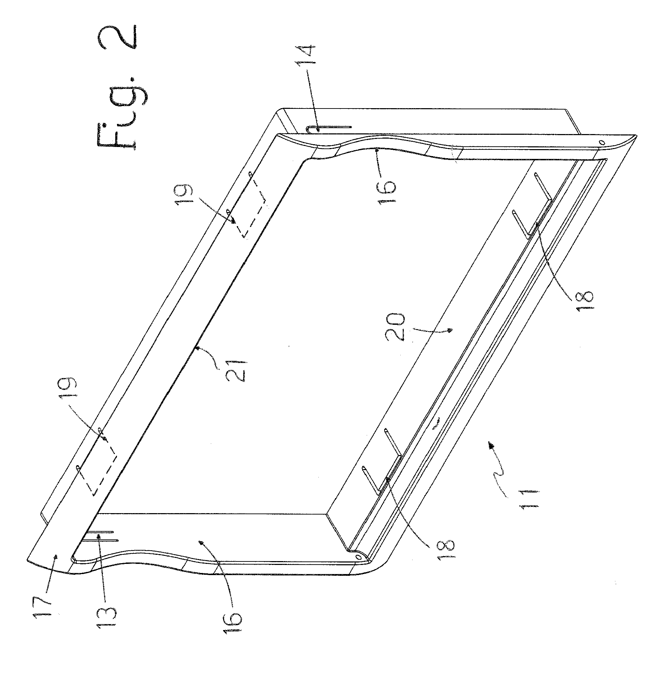

Figures 2-3 illustrate two components of the mounting device 10. As therein illustrated, the mounting device 10 comprises a first mount 11 which is suitable to be securedly connected to the panel 3, and a second mount 12 which is suitable to be securedly connected to the electronic unit 4. The second mount 12 is movably coupled to the first mount 11; preferably, the second mount 12 is pivotally coupled to the first mount 11.

In the exemplary embodiment illustrated in figure 2, the first mount 11 has a frame-shaped body and comprises a first elastic portion 13 and a second elastic portion 14 each protruding inwardly from a respective internal lateral side 16 of the frame-shaped body and adapted for coupling with the second mount 12. As schematically illustrated, the two elastic portions 13 and 14 are for example constituted by two respective protuberances having at an end thereof a respective pivot 17 (only one of which is illustrated in figure 2).

Further, the first mount 11 comprises also at least a first elastic protuberance 18 and a second elastic protuberance 19 which protrude inwardly from the internal bottom side 20 and the internal top side 21 of the frame-shaped body, respectively, and are adapted for connecting with the panel 3. In particular, the first mount 11 comprises two elastic protuberances 18 and two elastic protuberances 19 which behave in a spring-like manner and securedly couple the first mount 11 with the panel 3 once the mounting device 10 is installed.

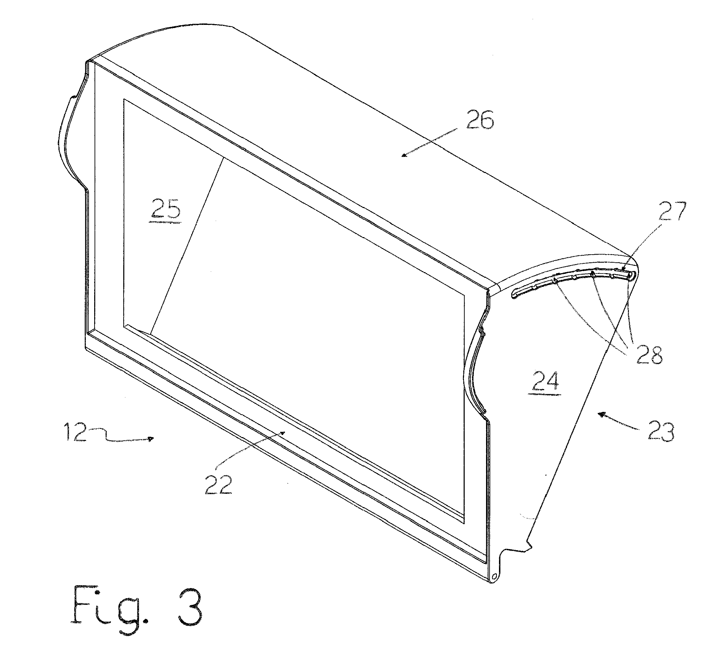

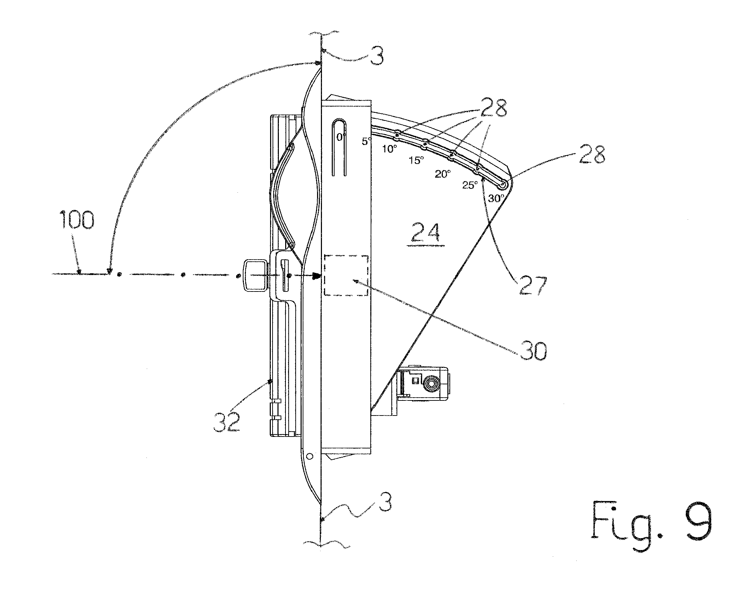

As illustrated in figure 3, the second mount 12 comprises a shaped body which is adapted for coupling with the shaped body of the electronic unit 4 and to be positioned inside and substantially geometrically mate with the frame-shaped body of the first mount 11. In particular, as illustrated in the embodiment of figure 3, the second mount 12 comprises a first portion 22 which has a frame-shaped body and a second portion 23 which protrudes from the frame-shaped first portion 22. The second portion 23 comprises a first tab 24 and a second tab 25 which protrude each from a respective lateral side of the frame-shaped first portion 22, and a curved portion 26 which connects the first and second tabs 24 and 25. Advantageously, the first and second tabs 24 and 25 comprise each a respective curved slot 27 for receiving a corresponding part of the first and second elastic portions 13 and 14, respectively, e.g. the pivots 17. As illustrated in figure 9, each of the curved slots 27, only one of which is visible in figure 3, is provided along its extension with a plurality of recesses 28 spaced apart from each other.

When the electronic unit 4 is connected to the panel 3 by using the mounting device 10, the first mount 11 is securedly connected to the panel 3 by means of the protuberances 18-19 which couple with the panel 3 itself. In particular, when the two elements 11 and 3 are under coupling, the elastic protuberances 18-19 are first compressed and then they elastically exert a retention force against the corresponding surfaces of the panel 3.

The second mount 12 is positioned inside the frame-shaped of the first mount 11 and securedly connected to the body of the electronic unit 4. The connection between the electronic unit 4 and the second mount 12 can be realized for example in a similar manner as the coupling between the panel 3 and the first mount 11, e.g. by means of some elastic protuberances schematically illustrated in figure 9 by the reference number 30 which are provided on the sides of the body of the unit 4. When the two elements 4-12 are under coupling, the elastic protuberances 30 are first compressed and then they elastically exert a retention force against the corresponding surfaces of the second mount 12.

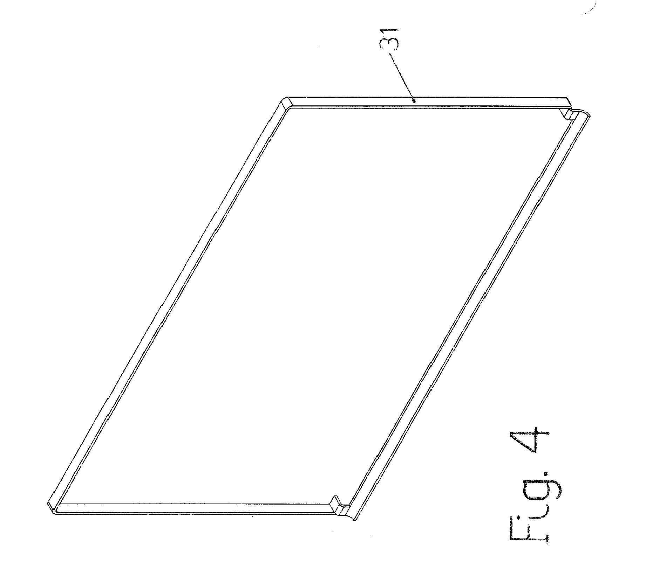

Preferably, between the first mount 11 and the second mount 12 is positioned a shaped gasket 31 an exemplary embodiment of which is illustrated in figure 4. Further, another gasket similar to the gasket 31 is preferably positioned between the second mount 12 and the electronic unit 4. The two gaskets provide an adequate sealing between the internal part of the switchgear 1 and the external environment and contribute to maintain a desired degree of protection. An additional transparent cover 32 can be also applied over the interfacing face provided with the display in order to improve the protection of the electronic unit 4.

The coupling between the first mount 11 and the second mount 12 is realized by the insertion of the pivot 17 each into a respective slot 27 as illustrated in figure 9.

As illustrated in figures 1, 7 and 9, in an initial position the electronic unit 4 is substantially flush-mounted on the panel 3 of the switchgear 1 with each pivot 17 inserted into a corresponding recess 28 provided for example at the end of each slot 27. As previously mentioned, the mounting device 10 can be mounted is a first configuration illustrated in figure 5 where the first mount 11 and the second mount 12 are positioned so that the coupling between the elastic protuberances 13 and 14 and the respective slots 27 occurs at the top side of the electronic unit 4. Alternatively, the mounting device 10 can be mounted is a second configuration illustrated in figure 7 wherein, with reference to the panel 3, it is mounted upside down with respect to the first configuration. In this case, the first mount 11 and the second mount 12 are positioned so that the coupling between the elastic protuberances 13 and 14 and the respective slots 27 occurs at the bottom side of the electronic unit 4.

In both configurations of the embodiments illustrated, the face adapted for interfacing with the user, and in particular the display 5, is initially substantially parallel to the mounting panel 3 and therefore perpendicular to a reference horizontal axis 100 perpendicular to the panel 3 itself. Clearly, if desired, the electronic unit 4 can be mounted in the initial position already inclined with respect to the panel 3, and therefore it would not be perpendicular to the reference axis 100.

Once a user needs to operatively interact with the unit 4 and this interaction in the initial position is difficult or uncomfortable due for instance to a too-high or too low positioning of the unit 4 on the switchgear or to disturbing light reflections, the user can modify the inclination of the unit 4 for example by moving the second mount 12 relative to the first mount. Accordingly, each pivot 17 will slide into the corresponding slot 27 and can be clicked into one of the recesses 28 once the unit 4 has reached a position desired for the user. The stability of this position is kept by the coupling between the pivots 17 and the corresponding recesses 28.

In this way, the unit 4 can be positioned into several tilted positions in which the plane 50 on which the interfacing face and in particular the display 5 lies is not rotated about the reference axis 100 but is inclined upwardly or downwardly. Thus, the angles α and β formed by the plane 50 on which the display 5 lies with the reference axis 100 or the panel 3, respectively, are modified with respect to the initial position.

As it will be appreciated by any person skilled in the art, the electric switchgear according to the present invention is suitable for use in several types of electric substation, such as for instance but not limited to electric distribution automation substations. Hence, the present invention relates also to an electric substation comprising an electric switchgear as previously described and defined in the appended claims. In addition, as it will be further appreciated by a person skilled in the art, the present invention may take also the form of an electronic device suitable for being used in an electric switchgear of the type having a panel. The electronic unit according to the invention comprises a shaped body having a face adapted for interfacing with a user, and is in particular characterized in that it further comprises a mounting device for connecting the shaped body to the panel of the switchgear in tiltable position with respect to the panel itself as previously described.

In practice, it has been found that the switchgear, substation or electronic device according to the present invention fully achieve the intended aim, providing a user with a more comfortable solution achieved according to a very simple constructive way while keeping also a required degree of protection.

It is to be understood that the description of the foregoing exemplary embodiment(s) is (are) intended to be only illustrative, rather than exhaustive, of the present invention. Those of ordinary skill will be able to make certain additions, deletions, and/or modifications to the embodiment(s) of the disclosed subject matter without departing from the spirit of the invention or its scope, as defined by the appended claims. For example, the shape of the various components of the mounting device 10, and/or their mutual coupling, and/or their coupling with the panel 3 or the unit 4 can be suitably modified. For instance, the size of the components of the mounting device 10 can be modified for coupling more than one electronic unit, for example two, to a panel of a switchgear with such electronic units tiltable all at the same time or independently from each other. Further, the shape of the first 11 and second mount 12 could be modified by realizing a mutual coupling either at the top side and at the bottom side and with pivot coupling points provided at an intermediate zone so as to have a unique mounting configuration with possibility to tilt the electronic unit either upwardly and downwardly.

## Claims

1. An electric switchgear comprising:
- a panel;
- at least one electronic unit having a face adapted for interfacing with a user; **characterized in that** it comprises a mounting device for connecting said at least one electronic unit to said panel in tiltable position with respect to the panel itself.

2. The electric switchgear according to claim 1, **characterized in that** said mounting device is configured to connect said at least one electronic unit to said panel in a plurality of different stable positions.

3. The electric switchgear according to claim 2, **characterized in that** in each of said plurality of positions said face for interfacing with a user has a different inclination with respect to said panel.

4. The electric switchgear according to one or more of the preceding claims, **characterized in that** said mounting device is configured to connect said at least one electronic unit to said panel in one or more stable positions tilted upwardly with respect to said panel.

5. The electric switchgear according to one or more of claims 1-3, **characterized in that** said mounting device is configured to connect said at least one electronic unit to said panel in one or more stable positions tilted downwardly with respect to said panel.

6. The electric switchgear according to claim 1, **characterized in that**, with respect to said panel, said mounting device is configured to be connected to said panel in a first configuration or in a second configuration wherein it is mounted upside down with respect to the first configuration.

7. The electric switchgear according to one or more of the preceding claims **characterized in that** said mounting device comprises a first mount securedly connected to said panel, and a second mount securedly connected to said at least one electronic unit, said second mount being movably coupled to said first mount.

8. The electric switchgear according to claim 7, **characterized in that** said second mount is pivotally coupled to said first mount.

9. The electric switchgear according to claim 7, **characterized in that** said first mount has a frame-shaped body and comprises a first elastic portion and a second elastic portion each protruding inwardly from a respective lateral side of said frame-shaped body, said first and second elastic portions being adapted for coupling with said second mount.

10. The electric switchgear according to claim 9, **characterized in that** said first mount comprises at least a first elastic protuberance and a second elastic protuberance protruding inwardly from the bottom side and the top side of said frame-shaped body, respectively, said first and second protuberances being adapted for connecting with said panel.

11. The electric switchgear according to claim 7 **characterized in that** said second mount has a first portion which is frame-shaped and is positioned inside said frame-shaped body of the first mount and a second portion which protrudes backwardly from said frame-shaped first portion.

12. Electric switchgear according to claim 9 **characterized in that** said second portion comprises a first tab and a second tab which protrude each from a respective lateral side of the frame-shaped first portion, and a curved portion which connects said first and second tabs.

13. Electric switchgear according to claim 9 **characterized in that** said first and second tabs comprise each a curved slot for receiving a part of said first and second elastic portions, respectively, each curved slot being provided along its extensions with a plurality of recesses spaced apart from each other.

14. An electric substation comprising an electric switchgear according to one or more of the preceding claims.

15. An electronic device suitable for being used in an electric switchgear having a panel, said electronic unit comprising a shaped body having a face adapted for interfacing with a user, **characterized in that** it further comprises a mounting device for connecting said shaped body to said panel in tiltable position with respect to the panel itself.
